Europäisches Patentamt

**European Patent Office**

**Office européen des brevets**

(19)

(11) Publication number: **0 083 430**
**A1**

# EUROPEAN PATENT APPLICATION

(21) Application number: **82111586.2**

(22) Date of filing: **14.12.82**

(51) Int. Cl.³: **G 03 B 11/00**

(30) Priority: **14.12.81 JP 185904/81 U**
**14.12.81 JP 185905/81 U**

(43) Date of publication of application: **13.07.83**
**Bulletin 83/28**

(84) Designated Contracting States: **CH DE FR GB IT LI**

(71) Applicant: **KENKO CO., LTD., 2-16-11, Nihonbashi, Chuo-ku Tokyo (JP)**

(72) Inventor: **Kikuchi, Yasunobu, 8-21-13, Machiya, Arakawa-ku Tokyo (JP)**

(74) Representative: **Schübel-Hopf, Ursula et al, Strehl, Schübel-Hopf, Schulz Patentanwälte Widenmayerstrasse 17, D-8000 München 22 (DE)**

(54) **Filter holder for a photographic apparatus.**

(57) This invention relates to a filter holder for a photographic apparatus comprising a ring-like holder body (1) and a mounting ring (2) for mounting said holder body on the photographing apparatus, characterized in that a pair of guide members (3, 4) are opposedly projected on one surface of said holder body (1), a plurality of guide channels (3a, 3b, 4a, 4b) adapted to mount the filter (5) therein are formed on the opposed inner surfaces of said guide members, and three pawls (7, 8, 9) in which the peripheral edge of said mounting ring (2) engages are inwardly projected on the other surface thereof, one of said pawls having a resiliency imparted by a channel formed in required length along the ring-like peripheral edge whereby the pawl is opened outwardly.

Filter Holder For a Photographic Apparatus

This invention relates, in photographing apparatus such as cameras, to a filter holder which is mounted on a front surface of a lens for use, which is mounted removably and in which a filter may be replaced.

PRIOR ART

Heretofore, filter holders mounted on the front surface of a camera lens for use are well known which have various constructions, for example, such a filter holder being disclosed in Japanese Patent Application Laid-Open No. 54-130121. This well known filter holder comprises a body whose whole shape is generally hexagonal and an intermediate ring, the hexagonal body having the filter mounted thereon, the intermediate ring being provided to mount the body on the photographic apparatus such as a camera.

In such a filter holder, said body and said intermediate ring are connected by a channel provided on the side of the body and extended slightly from a semi-circle and by a clip in the form of a triangular abutting portion slightly projected. In this case, however, insertion of the intermediate ring into the channel is achieved from one side and therefore the interior of the channel becomes rubbed; an excessive force is applied when passing the abutting portion, for the reason of which elements become damaged; and in the clip only comprising the abutting portion after insertion, there is a clearance therebetween resulting in a play, as a consequence of which not only the mounting stability is insufficient but when the camera is operated and when the camera is carried about, noises of clatter occur to give a user an uneasiness and an unpleasant feeling.

In an arrangement wherein a filter is mounted on the body, a pair of guide members are projected on the front surface, guide channels are formed on opposed surfaces of said guide members, a wall surface of one of these channels is partly inwardly projected in a curved fashion to impart a resiliency thereto, and the filter inserted into the guide groove is pressed and held by the resiliency of the curved portion. Accordingly, this is a system in which the filter is pressed and held by the curved portion of the guide channel, and thus, a portion which is pressed and exposed to friction when the filter is mounted is damaged, and even if said damage occurs in a portion not used for photographing but if it is a filter portion applied with coating or dyeing, there is a possible spread of the damage from said damaged portion to the centeral portion of the filter. Furthermore, since the guide members are fixed, if the width of the filter is greater, even by a slight amount, than the width

0083430

- 3 -

between the guide members, the filter becomes unusable and the allowable range of the dimension of the filter is greatly limited. Moreover, for those filters whose thickness is more than a certain value, such filters are impossible to be inserted into the channel, and conversely, if they are thin, the filters are impossible to be pressed and held with the result that a great limitation is imposed also in respect of thickness of the filter, thus lacking in general use.

SUMMARY OF THE INVENTION

This invention has been achieved in view of the aforementioned actual circumstances. A first object of the present invention is to provide a filter holder for a photographic apparatus in which in engagement and securement between a body of a filter holder and a mounting ring for mounting said body on the photographing apparatus, the mounting operation may carried out easily, there occurs no damage resulting from elements which rub against each other, and the mounting state is stabilized.

It is another object of the present invention to provide a filter holder for a photographic apparatus in which in mounting a filter on a filter holder, there is no danger to damage the filter, and the filter holder may be used even if the width and thickness of the filter is somewhat rough in dimension.

That is, according to the invention, there is

- 4 -

provided a filter holder for a photographic apparatus comprising a ring-like holder body and a mounting ring for mounting said holder body on the photographing apparatus, characterized in that a pair of guide members are opposedly projected on one surface of said holder body, a plurality of guide channels adapted to mount the filter therein are formed on the opposed inner surfaces of said guide members, and three pawls in which the peripheral edge of said mounting ring engages are inwardly projected on the other surface thereof, one of said pawls having a resiliency imparted by a channel formed in required length along the ring-like peripheral edge whereby the pawl is opened outwardly. The present invention thus provides a filter holder wherein because of the structure in which one pawl is opened outwardly by the resiliency, if the mounting ring in registration with the inner peripheral surface of the holder body is inserted under the condition that said pawl is opened outwardly, mounting thereof may be easily achieved, and after insertion thereof, the mounting ring is returned to its original position by its own resiliency, it is urged against the peripheral surface of the mounting ring, as a consequence of which no play occurs and mounting and connection therebetween become extremely stabilized.

According to another invention, there is provided a photographic ring-like filter holder mounted on photographing apparatus through a mounting ring, wherein a pair of guide members are opposedly projected on a surface on which mounting ring is mounted and on a surface opposite thereto, a plurality of guide channels to insert the filter therein are formed on the inner surfaces opposed each other of said guide members, said guide channel having the width greater than the thickness of the filter, cut-ins to make said plurality of guide channels independent one another are provided on one of said guide members, and said cut-ins are made to be continuous to cut-ins formed in required length along the ring-like peripheral edge to thereby impart a radial resiliency by guide channels, the filter being held by said resiliency.

BRIEF DESCRIPTION OF THE DRAWINGS

The drawings show a filter holder for photographing apparatus in accordance with the present invention, in which:

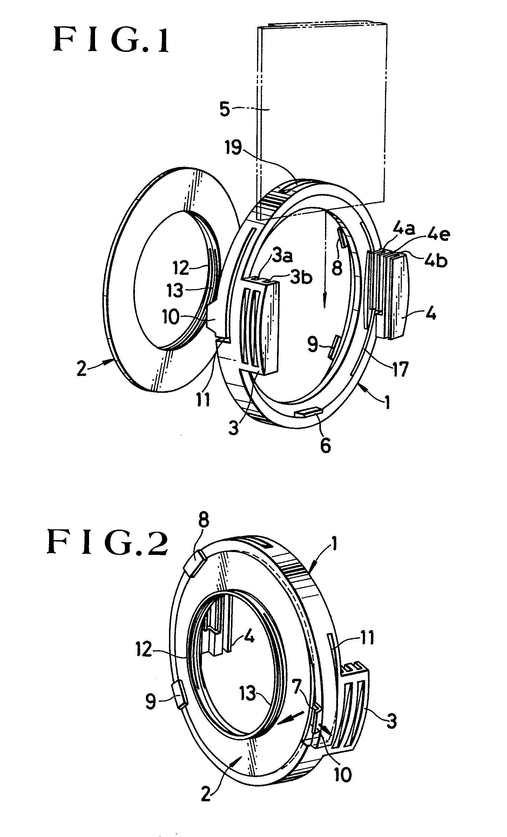

Fig. 1 is a perspective view, on front side, showing the filter holder in exploded form;

Fig. 2 is a perspective view, on rear side, of a combination of a holder body of the filter holder and a mounting ring;

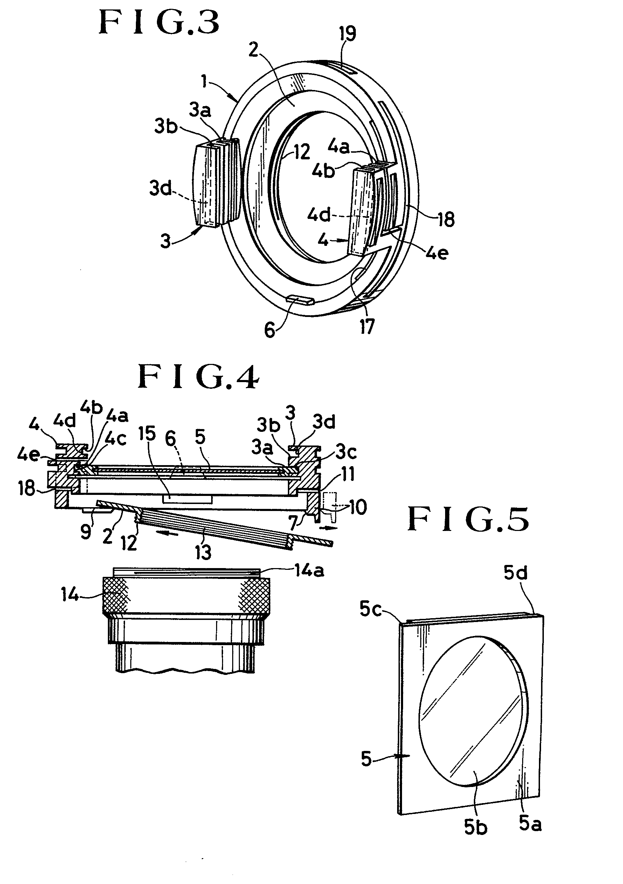

Fig. 3 is a perspective view, on front side, of the filter holder;

Fig. 4 is a sectional view of a principal portion of the filter holder; and

Fig. 5 is a perspective view of a filter used for the filter holder.

- 6 -

DESCRIPTION OF THE PREFERRED EMBODIMENTS OF THE INVENTION

In the figures, reference numeral 1 designates a holder body formed into a ring-like configuration using synthetic resin, which constitutes a filter holder with a mounting ring 2 for mounting said holder body on the photographing apparatus such as a camera.

A pair of guide members 3 and 4 are, at their symmetrical position, opposedly projected on one surface of the holder body 1, and these guide members are formed in their inner sides opposed to each other with a plurality of guide channels 3a, 3b, 4a, 4b of a filter 5. Said surface is further formed with a projection 6 for stopping the filter 5 and controlling the inserting direction thereof. One guide member 4 of said one pair of guide members is formed with a cut-in 4e adapted to separate and make guide channels 4a and guide channel 4b independent between the guide channel 4a and guide channel 4b from one end to a portion in the neighbourhood of the other end parallel to the guide channel, and being vertically extended so as to reach cut-ins 17 and 18 which will be described later.

The width of each guide channel is set so as to have a dimension greater than a thickness of the filter so that the filter 5 may be inserted with an allowance. Bottom surfaces 4c, 4d of the guide channels 4a, 4b of the guide member 4 are curved in a mountainous fashion, and the central portions thereof are extended most inwardly and reach both ends with a smooth curve.

Further, corner portions constituted by the bottom surfaces 3d, 3c, 4d, 4c of the guide channels and the sides of the guide channels are rounded off, for example, with $0.5^R$.

The holder body has the other surface projectingly formed with inwardly directed three pawls 7, 8 and 9 so that the pwals 8, 9 may form a substantially equilateral triangle with the pawl 7 being an apex. In accordance with one embodiment, the pawls 8 and 9 are provided which are each positioned at an angle of $135^o$ relative to the pawl 7. A finger-engaging portion 10 stood upright is provided on said pawl 7, and the body in which portion is formed with a pawl is formed with a channel 11 in the form of substantially L so that the pawl 7 portion may be opened in a peripheral direction with resiliency, said channel being formed in required length in the peripheral direction to thereby give a moderate resiliency thereto when the pawl is open.

Reference numeral 15 designates portions for controlling the position of the mounting ring, which are provided at a few locations in the inner surface of the peripheral wall of the holder body to hold and fix the mounting ring 2 with said pawl.

The mounting ring 2 is formed with a flange portion 12 along the edge of the inner opening thereof, and the flange portion is externally formed with a threaded channel 13. The mounting ring has its outside diameter of such size that it may be fitted in the inside of the other surface of said holder body 1 and fitted from the other surface thereof.

The holder body 1 is further formed with cut-ins 17 and 18 along the ring-like peripheral edge to divide the guide member 4 into a portion including the guide channel 4a and a portion including the guide channel 4b continuous to said cut-in 4e, each of which is movable otwardly independently and with stability. The cut-ins 17 and 18 are provided at position separately from said cut-in 11. Reference numeral 6 denotes a stopper for controlling the position of the filter when the filter 5 is inserted into the guide channels 3a and 4a, and is provided at a position rotated through about $90^{\circ}$ in the same peripheral edge as the guide members 3 and 4 and has a height irrespective of the filter inserted into the other guide channels 3b and 4b.

It should be noted that the filter 5 used may be used without modification if it is a square filter, and if the filter is a round filter, a filter can be used which is designed so that as shown in Fig. 5, a round filter 5b is held by a square frame 5a, and shoulders 5c and 5d are formed on both sides at the back of the frame 5a to facilitate insertion thereof into the guide channel. In the figures, reference numeral 14 denotes a cylindrical portion in which a photographic lens is fitted, 14a is threads formed in the end of said cylindrical portion, and 19 is a channel for mounting a hood not shown.

In connection between the holder body 1 and the

- 9 -

mounting ring 2 constructed as mentioned above, the peripheral edge of a part of the mounting ring 2 is first inserted inside of the pawls 8 and 9 and subsequently the finger is brought into engagement with the finger-engaging portion 10 to open the pawl 7 outwardly, then a portion separated by the channel is opened outwardly as shown by the phantom line whereby the mounting ring 2 passes over the pawl 7 and is fitted into the holder body 1. Thereafter, if the finger is released from the finger-engaging portion 10, it is returned to its original position by its own resiliency to compress and hold the mounting ring 2 to provide a firm connection therebetween. In the case the mounting ring 2 is removed, the operation reversely to the former may be carried out.

In the event that the filter holder of the present invention is mounted on the photographing apparatus, the holder body 1 and the mounting ring 2 are connected before hand as described hereinbefore, after which the filter holder can be threadably mounted through the threaded channel 13 in the threads 14a of the cylindrical portion 14 in which the lens is fitted. Alternatively, the mounting ring 2 is first mounted before hand in the threads 14a of the cylindrical portion 14, and then the holder body can be fitted therein in a manner as previously mentioned.

The insertion of the filter into the holder body will be described. The filter 5 is inserted into the guide channels 3a and 4a from the front side of the holder body 1 and upwardly thereof, that is, from the side where the stopper 6 is not provided whereby the filter 5 comes into contact with the bottom surfaces 3c and 4c and moves forward while outwardly spreading the guide member 4 including the guide channel 4a operated independently by the cut-ins 4e, 17 and 18. At this time, the bottom surface 4c of the guide channel 4a is curved and therefore the filter 5 moves forward smoothly, and the corners thereof are rounded off and thus the filter is not possibly damaged when it is inserted. At the time when the filter 5 abuts against the stopper 6, the filter 5 becomes completely mounted. At this time, however, the filter 5 outwardly spreads the guide member 4 including the guide channel 4a, and thus the stability acts on the guide member which tends to return to its original position by said stability. Accordingly, in the present invention, said stability is given to the side of the filter 5 to press both sides of the filter 5 and hold and fix the latter. The dimension between the bottom surfaces of the guide channels 3a and 4a in contact with the filter 5 is variable and therefore even if there is a slight irregularity in size of the filter, the filter may be inserted without any trouble, and a force is rarely applied to the inside and outside of the filter to prevent the inside and outside thereof from being damaged.

Furthermore, since the device has a mechanism in which the central portion of the bottom surface 4c of the guide channel 4a is inflated and the side of the filter is pressed by the apex thereof, the filter may be held and fixed in a stabilized manner. In addition, since the width of the guide channel 4a is set in dimension with an allowance irrespective of holding the filter, the filter may be inserted and mounted even if there is an irregularity in thickness. On the other hand, when filters are placed one above the other, a separate filter can be fitted in the filter holder 1 under the condition as described above by making use of the guide channels 3b and 4b. In this case, there is nothing to do with the stopper 6, and therefore, the exactly the same manner as the insertion of fiter as described above except being subjected to limitation of inserting direction. Since the guide member including the guide channel 4a and the guide member including the guide channel 4b are independent from each other, even if amounts of outward spreading of said both members are different as a result of different size in filter, the filter may be firmly held without any problem.

It should be understood that if only one filter is used, either guide channels 3a, 4a or guide channels 3b, 4b can be applied.

As described hereinbefore, in the filter holder for photographing apparatus in accordance with the present invention, the holder body and the mounting ring are connected in a manner such that three pawls engage in the outer peripheral edge of the mounting ring and one pawl postioned at the apex of the equilateral triangle is opened in a radial direction with resiliency, and accordingly, the mounting ring may be snapped in the holder body under the condition that said pawl is open, carrying out the connecting operation of both elements in an extremely simple manner.  Further, since the pawl which is open with resiliency resiliently abuts against the outer peripheral surface of the mounting ring, it compresses and holds the mounting ring to form no clearance, and therefore, there is no play present therebetween and no unpleasant noise occurs.

In the case both the holder body and mounting ring are removed from the cylindrical portion of the lens under the condition that the holder body and mounting ring are mounted on the cylindrical portion of the lens, the prior art filter holder requires a cumbersome operation in which the holder body is first removed from the mounting ring, and thereafter the mounting ring is removed from the cylindrical portion of the lens, whereas in the present invention, a pawl portion having a resiliency is pressed from outside whereby the mounting ring is firmly pressed and as the result the mounting ring is placed in non-rotative relative to the holder body, under which condition, when the holder body is rotated, the holder body and the mounting ring become integral with each other, which may be then removed from the cylindrical portion of the lens.  The present invention further has an excellent effect in that since the mounting ring may be fitted by opening one pawl, there has no portions which rub each other and elements are not scratched.

Moreover, in mounting and removing the filter, since the guide members are designed so as to press and hold the side of the filter, the filter may be held satisfactorily even if there is slight irregularity in size of the filter. In addition, since the guide grooves in which the filter is fitted are operated independently each other, there involves no inconvenience in securing the filter even if the size of the filter is somewhat different.

Furthermore, the present invention provides great advantages that since the corner portions of the guide channels are rounded off, the filter is not possibly damaged, and that the bottom surfaces of the guide channels which are operated are curved and therefore the insertion of the filter may be achieved smoothly and the filter may be secured in a stabilized manner.

CLAIMS

1. A filter holder for a photographic apparatus comprising a ring-like holder body and a mounting ring for mounting said holder body on the photographing apparatus, characterized in that a pair of guide members are opposedly projected on one surface of said holder body, a plurality of guide channels adapated to mount the filter therein are formed on the opposed inner surfaces of said guide members, and three pawls in which the peripheral edge of said mounting ring engages are inwardly projected on the other surface thereof, one of said pawls having a resiliency imparted by a channel formed in required length along the ring-like peripheral edge whereby the pawl is opened outwardly.

2. A filter holder according to Claim 1, wherein a flange portion is formed in an inner opening of the mounting ring, and a threaded channel is fromed internally or externally of said flange portion.

3. A photographic ring-like filter holder mounted on a photographic apparatus through a mounting ring, wherein a pair of guide members are opposedly projected on a surface on which mounting ring is mounted and on a surface opposite thereto, a plurality of guide channels to insert the filter therein are formed on the inner surfaces opposed each other of said guide members, said guide channel having the width greater than the thickness of the filter, cut-ins to make said plurality of guide channels independent one another are provided on one of said guide members, sand said cut-ins are made to be continuous to cut-ins formed in required length along the ring-like peripheral edge to thereby impart a radial resiliency by guide channels, the filter being held by said resiliency.

½

**F I G.1**

**F I G.2**

**FIG.3**

**FIG.4**

**FIG.5**

European Patent
Office

**EUROPEAN SEARCH REPORT**

Application number

EP 82 11 1586

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | EP-A-0 004 246 (J.C. COQUIN) <br> * Figure 1 * | 1 | G 03 B 11/00 |

TECHNICAL FIELDS
SEARCHED (Int. Cl. ³)

G 02 B 7/00
G 03 B 11/00
G 03 B 17/00

The present search report has been drawn up for all claims

| Place of search <br> BERLIN | Date of completion of the search <br> 22-02-1983 | Examiner <br> HOPPE H |
|---|---|---|